# EUROPÄISCHE PATENTANMELDUNG

(11) **EP 2 192 311 A2**
(43) Veröffentlichungstag der Anmeldung: **02.06.2010**
(21) Anmeldenummer: 09013119.4
(22) Anmeldetag: 16.10.2009
(51) Int. Cl.: F16C 11/04

(54) **Anschlusseinrichtung**

(30) Priorität: 26.11.2008 DE 202008015666 U
(71) Anmelder: Dura Automotive Systems GmbH, 40549 Düsseldorf (DE)
(72) Erfinder: Muschalik, Marius, 50226 Frechen (DE)
(74) Vertreter: Paul, Dieter-Alfred

(57) **Zusammenfassung**

Die vorliegende Erfindung betrifft eine Anschlusseinrichtung mit einem Anschlussring (4) und einer in dem Anschlussring (4) gehaltenen Anschlusshülse (9), die eine zentrale Aufnahme (10) bildet, in welche ein Anschlusskopf (3) durch eine Einschuböffnung (10a) eingeschoben werden kann, und die Halteelemente (11) trägt, um einen Anschlusskopf (3) in der Aufnahme (10) zu fixieren, wobei die Anschlusshülse (9) in dem Anschlussring (4) zwischen einer Freigabestellung, in welcher die Halteelemente (11) aus einer inneren Spannstellung derart elastisch aufgespreizt werden können, dass ein Anschlusskopf (3) in die Aufnahme (10) eingeschoben bzw. aus dieser entnommen werden kann, und einer Arretierungsstellung, in welcher die Halteelemente (11) an einer solchen Ausspreizbewegung gehindert werden, axial bewegbar gehalten ist, und wobei die Anschlusshülse (9) durch elastische Mittel (13) in ihrer Arretierungsstellung gedrückt wird, wobei die Anschlusshülse (9) an ihrem offenen benachbarten Endbereich aus dem Anschlussring (4) heraussteht, so dass sie manuell aus der Arretierungsstellung in die Freigabestellung gedrückt werden kann, wenn ein Anschlusskopf (3) in die Anschlusshülse (9) eingeschoben und durch die Halteelemente (11) fixiert ist.

## Beschreibung

Die vorliegende Erfindung betrifft eine Anschlusseinrichtung mit einem Anschlussring und einer in dem Anschlussring gehaltenen Anschlusshülse, die eine zentrale Aufnahme bildet, in welche ein Anschlusskopf durch eine Einschuböffnung eingeschoben werden kann, und die Halteelemente trägt, um einen Anschlusskopf in der Aufnahme zu fixieren, wobei die Anschlusshülse in dem Anschlussring zwischen einer Freigabestellung, in welcher die Halteelemente aus einer inneren Spannstellung derart elastisch aufgespreizt werden können, dass ein Anschlusskopf in die Aufnahme eingeschoben bzw. aus dieser entnommen werden kann, und einer Arretierungsstellung, in welcher die Halteelemente an einer solchen Ausspreizbewegung gehindert werden, axial bewegbar gehalten ist, und wobei die Anschlusshülse durch elastische Mittel in ihrer Arretierungsstellung gedrückt wird

Anschlusseinrichtungen dieser Art sind bekannt und werden insbesondere zur Verbindung von Betätigungszügen oder Betätigungsgestängen mit zu betätigenden Organen in Kraftfahrzeugen, beispielsweise Vergasern etc., eingesetzt.

Die Anschlusseinrichtungen bestehen aus einem Anschlusskopf, der beispielsweise an dem zu betätigenden Organ befestigt ist, und einem Anschlussendteil, das mit einer Betätigungseinrichtung gekoppelt ist und eine Aufnahme aufweist, in welche der Anschlusskopf eingesetzt und formschlüssig fixiert werden kann. Bei einer Anschlusseinrichtung, welche aus der DE 197 17 446 B4 bekannt ist, wird die Aufnahme von einer Anschlusshülse gebildet, die an ihrem einen Endbereich Halteelemente trägt, die beim Einschieben des Anschlusskopfes in die Aufnahme elastisch aufgespreizt werden und in der eingeschobenen Position nach innen in eine Ringnut des Anschlusskopfes in ihre Spannstellung zurückfedern, um diesen zu fixieren.

Bei dieser Anschlusseinrichtung besteht das Problem, dass eine Verbindung des Anschlusskopfs mit der Anschlusshülse nur mit hoher Montagekraft möglich ist, wobei die Anschlusshülse beschädigt werden kann, und sich der Anschlusskopf und das Anschlussendteil nach der Verbindung auch nur schwer wieder voneinander lösen lassen.

In der DE-OS-28 38 745 wird daher vorgeschlagen, die Anschlusshülse, die hier als elastisch aufweitbare Lagerpfanne ausgebildet ist, axial verschiebbar anzuordnen, wobei sie aus einer Grundstellung, in der sie im Wesentlichen formschlüssig von einem Käfig umfasst wird und sich daher nur wenig aufweiten kann, entgegen der Rückstellkraft eines elastischen Elements axial in den Käfig in eine Einschubstellung gedrückt werden kann, in der die Lagerpfanne mehr Platz zum Aufweiten hat. Durch diese Ausbildung wird erreicht, dass die zum Einstecken des Anschlusskopfs in das Anschlussendteil erforderliche Kraft gering ist, da die Lagerpfanne sich in ihrer Einschubstellung leicht aufweiten kann, die Verbindung aber nur schwer lösbar ist, weil die Lagerpfanne durch die Rückstellkraft des elastischen Elements in ihre Grundstellung zurückgebracht wird, in der eine Aufweitung der Lagerpfanne zumindest weitgehend verhindert wird. Mit dieser Anschlusseinrichtung wird zwar das Einschieben des Anschlusskopfes in das Anschlussendteil erleichtert, ein Lösen ist jedoch nach wie vor schwierig.

Um dieser Problematik zu begegnen, wird in der DE 299 01 041 U1 vorgeschlagen, die Lagerpfanne mit dem steifen Käfig derart zu verschrauben, dass die Lagerpfanne durch Festdrehen bzw. Lösen der Schraubverbindung zwischen der Grundstellung und der Einschubstellung bewegt werden kann. Damit ist es möglich, die Lagerpfanne auch zum Lösen eines Anschlusskopfes in die Einschubstellung zu bewegen, so dass der Anschlusskopf leicht entnommen werden kann. Als nachteilig an dieser Lösung wird zum Teil angesehen, dass die Betätigung aufwendig ist, da jeweils zum Einsetzen bzw. Entnehmen eines Anschlusskopfes die Schraubverbindung zunächst gelöst und dann wieder festgedreht werden muss und zudem auch Werkzeuge benötigt werden.

Vor diesem Hintergrund liegt der vorliegenden Erfindung die Aufgabe zugrunde, eine Anschlusseinrichtung der eingangs genannten Art so auszugestalten, dass die Verbindung zwischen Anschlusskopf und Anschlussendteil mit wenig Kraft und Aufwand hergestellt und wieder gelöst werden kann.

Diese Aufgabe ist erfindungsgemäß dadurch gelöst, dass die Anschlusshülse an ihrem offenen Endbereich aus dem Anschlussring heraussteht, so dass sie manuell aus der Arretierungsstellung in die Freigabestellung gedrückt werden kann, wenn ein Anschlusskopf in die Anschlusshülse eingeschoben und durch die Halteelemente fixiert ist.

In an sich bekannter Weise ist die Anschlusshülse an dem Anschlussring axial bewegbar gehalten, wobei sie elastisch in ihre Ausgangsstellung - die Arretierungsstellung - gedrückt wird, in welcher die Halteelemente sich nicht oder nur wenig nach außen bewegen können. Um einen Anschlusskopf in die Aufnahme einsetzen oder aus dieser entnehmen zu können, muss die Anschlusshülse entgegen der Rückstellkraft des elastischen Elements in ihre Freigabestellung bewegt werden, so dass die Rastelemente nach außen elastisch aufgespreizt werden können, wenn der Anschlusskopf in die Aufnahme eingeschoben oder daraus entfernt wird. Die Anschlußhülse wird durch die Bewegung des Anschlußkopfes in die Freigabestellung gebracht, so dass die Rastelelemente sich frei aufspreizen können, was eine geringe Montagekraft garantiert.

Da die Anschlusshülse im Bereich ihres offenen Endes aus dem Anschlussring heraussteht, so dass sie auch bei montiertem Anschlusskopf zugänglich ist, ist es zum Lösen eines Anschlusskopfes möglich, die Anschlusshülse manuell in ihre Freigabestellung zu drücken. Dann kann der Anschlusskopf einfach entnommen werden.

Gemäß einer Ausführungsform der Erfindung ist vorgesehen, dass die Anschlusshülse an ihrem aus dem Anschlussring vorstehenden Endbereich einen radial nach außen vorstehenden Kragen trägt. Dieser ist zweckmäßigerweise derart dimensioniert, dass er seitlich gegenüber einem eingeschobenen Anschlusskopf vorsteht und somit leicht zugänglich ist.

Der Anschlusskopf weist in an sich bekannter Weise Ausnehmungen, beispielsweise eine Ringnut, auf, in welche die Halteelemente elastisch zurückfedern können, um den Anschlusskopf in der Anschlusshülse insbesondere formschlüssig zu fixieren. Wenn diese Verbindung hergestellt ist, braucht die Anschlusshülse nur noch losgelassen zu werden, so dass sie durch die Rückstellkraft des elastischen Elements in ihre Arretierungsstellung zurückgebracht wird. In dieser werden die Halteelemente an einem Aufspreizen gehindert, so dass ein Lösen des Anschlusskopfes nicht möglich ist.

In an sich bekannter Weise kann in dem Anschlussring eine Aufnahmebüchse gehalten sein, in welcher die Anschlusshülse axial bewegbar geführt ist, wobei dann die Anschlusshülse an ihrem offenen Ende axial aus der Aufnahmebuchse derart vorsteht, dass sie manuell betätigbar ist, wenn ein Anschlusskopf in die Anschlusshülse eingesetzt ist. In diesem Fall ist zweckmäßigerweise an der Aufnahmebuchse ein Anschlag vorgesehen, der in der Arretierungsstellung der Anschlusshülse außenseitig an den Rastelementen in Anlage kommt und sie an einem Ausweichen nach außen hindert.

Gemäß einer vorteilhaften Weiterbildung dieser Ausführungsform kann auch vorgesehen sein, dass die Anschlusshülse in ihrer Arretierungsstellung durch den Kontakt der Halteelemente mit dem Anschlag der Aufnahmebuchse axial in dieser positioniert wird. Hierzu kann beispielsweise an der Anschlusshülse und/oder der Aufnahmebuchse eine schräge Kontaktfläche vorgesehen sein, die sowohl eine axiale, als auch eine radiale Positionierung wirkt.

Nach einer weiteren Ausführungsform der Erfindung ist vorgesehen, dass die Anschlusshülse durch einen elastischen Ring, insbesondere einen O-Ring, der die Anschlusshülse umgibt und sich zwischen der Anschlusshülse und dem Anschlussring oder der Aufnahmebuchse axial abstützt, in die Arretierungsstellung gedrückt wird. Durch diese Ausgestaltung wird ein einfacher und kostengünstiger Rückstellmechanismus gebildet.

In bevorzugter Weise kann vorgesehen sein, dass die Halteelemente der Anschlusshülse innenseitig Auflaufschrägen aufweisen, die mit entsprechenden Gegenflächen eines Anschlusskopfes zusammenwirken, um die Anschlusshülse axial in die Freigabestellung und die Rastelemente elastisch nach außen zu drücken, wenn der Anschlusskopf in die Aufnahme axial eingeschoben wird. Alternativ oder zusätzlich kann vorgesehen sein, dass ein Anschlusskopf an seinem in die Aufnahme einzuschiebenden Endbereich Auflaufschrägen aufweist, die mit entsprechenden Gegenflächen an den Rastelementen zusammenwirken, um die Anschlusshülse axial in die Freigabestellung und die Rastelemente elastisch nach außen zu drücken, wenn der Anschlusskopf axial in die Aufnahme eingeschoben wird. Bei dieser Ausgestaltung wird die Anschlusshülse automatisch in ihre Freigabestellung bewegt, wenn der Anschlussbolzen in die Aufnahme eingeschoben wird. Daher kann es überflüssig sein, die Anschlusshülse zusätzlich manuell zu betätigen.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: im Längsschnitt eine Anschlusseinrichtung gemäß der vorliegenden Erfindung bei gelöstem Anschlussbolzen,
- Figur 2: die Anschlusseinrichtung aus Figur 1 bei Einschieben des Anschlussbolzens in das Anschlussendteil, und
- Figur 3: die Anschlusseinrichtung aus Figur 1, wobei der Anschlusskopf in dem Anschlussendteil fixiert ist.

In der Zeichnung ist eine Anschlusseinrichtung 1 gemäß der vorliegenden Erfindung dargestellt. Diese besteht im Wesentlichen aus einem Anschlussendteil 2 und einem Anschlusskopf 3.

Das Anschlussendteil 2 umfasst einen Anschlussring 4 aus Kunststoff, der eine nur angedeutete Anschlussstange 5 trägt, über welche eine Verbindung beispielsweise mit einem Betätigungszug hergestellt werden kann. In dem Anschlussring 4 sitzt ein ringförmiges Dämpfungselement 6, und in dem Dämpfungselement 6 ist wiederum eine Aufnahmebuchse 7 gehalten. Die obere Öffnung der Aufnahmebuchse 7 ist durch eine Abdeckkappe 8 verschlossen, welche auf die Aufnahmebuchse 7 geklemmt ist.

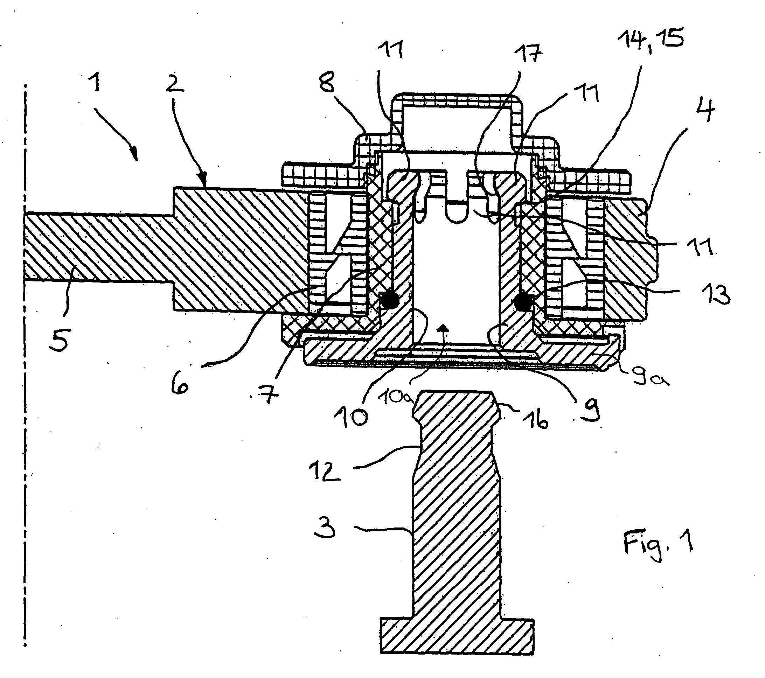

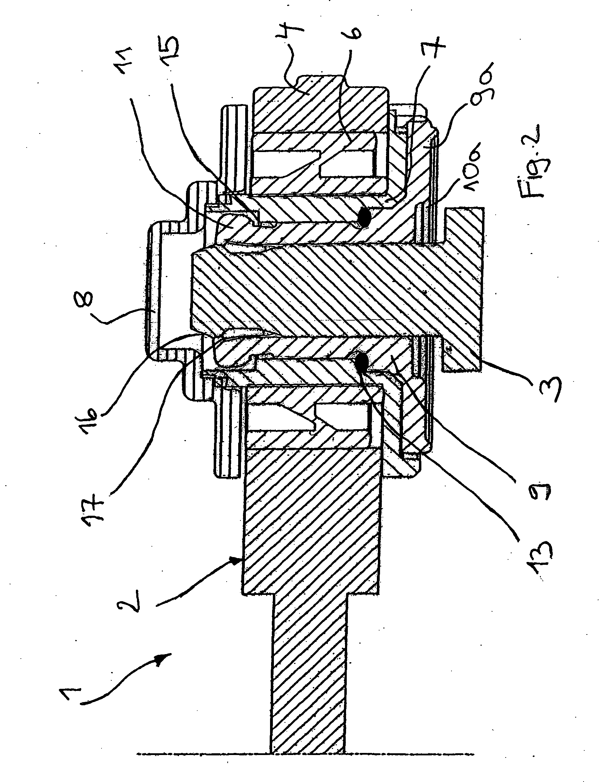

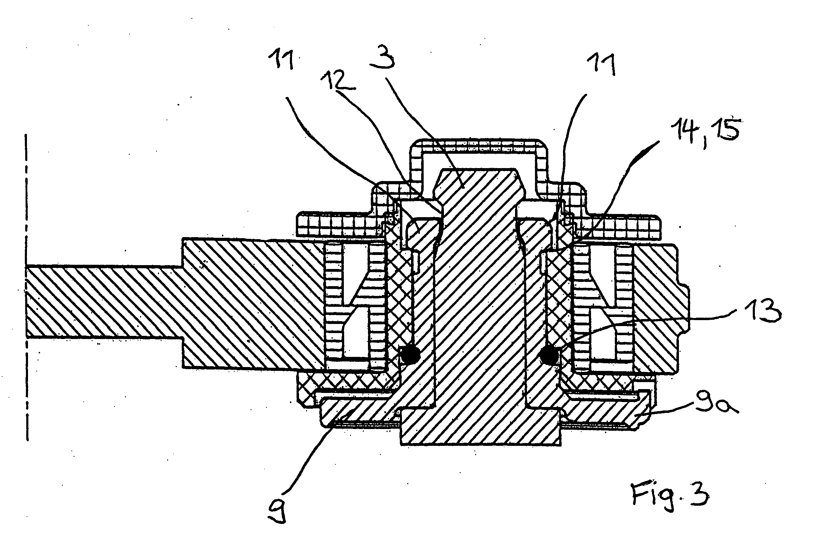

In die Aufnahmebuchse 7 ist von ihrem offenen Ende her eine Anschlusshülse 9 eingesetzt. Diese bildet eine zentrale Aufnahme 10, in die der bolzenförmig ausgebildete Anschlusskopf 3 durch eine Einschuböffnung 10a von unten her eingeschoben werden kann. Wie die Figur 1 gut erkennen lässt, ragt die Anschlusshülse 9 an ihrem unteren Endbereich axial aus dem Anschlussring 4 und der Aufnahmebuchse 7 heraus und trägt an diesem vorstehenden Endbereich einen radial nach außen ragenden Kragen 9a. Dieser ist derart dimensioniert, dass er seitlich gegenüber einem in die Aufnahme 10 eingesetzten Anschlusskopf 3 vorsteht (siehe Figuren 2 und 3).

An ihrem zur Abdeckkappe 8 weisenden oberen Endbereich trägt die Anschlusshülse 9 als Rastelemente 11 ausgebildete Halteelemente, die dazu dienen, einen in die Aufnahme 10 eingeschobenen Anschlusskopf 3 in dem Anschlussendteil 2 zu fixieren, indem sie mit einer Ringnut 12 des Anschlusskopfes 3 in Eingriff gebracht werden. Wie Figur 3 gut erkennen lässt, besitzen die Rastelemente 11 und die Ringnut 12 komplementäre Kontaktflächen, so dass ein Formschluss gebildet wird.

In an sich bekannter Weise nehmen die Rastelemente 11, die gleichmäßig verteilt entlang des Umfangs der Anschlusshülse 9 angeordnet sind, in ihrer Ausgangsstellung die in der Figur 1 dargestellt innere Spannstellung ein, können jedoch aus dieser Spannstellung elastisch aufgespreizt werden.

Die Anschlusshülse 9 ist in der Aufnahmebuchse 7 axial bewegbar gehalten. Dabei wird sie durch ein elastisches Element in der Form eines O-Rings 13, der auf die Anschlusshülse 9 aufgeschoben ist und sich zwischen der Anschlusshülse 9 und der Aufnahmebuchse 7 axial abstützt, in eine untere Ausgangsstellung gedrückt, in der geneigte Kontaktflächen 14 an der von der Abdeckkappe 8 weg weisenden Unterseite der Rastelemente 11 an einer Anschlagkante 15 der Aufnahmebuchse 7 anliegen, so dass die Anschlusshülse axial und radial positioniert wird. Die Anordnung ist dabei so getroffen, dass in dieser Ausgangsstellung - der in Figur 1 gezeigten Arretierungsstellung - der Kontakt zwischen den Kontaktflächen 14 der Rastelemente 11 und der Anschlagkante 15 der Aufnahmebuchse 7 ein Aufspreizen der Rastelemente 11 verhindert.

Aus der Arretierungsstellung kann die Anschlusshülse 9 axial entgegen der Rückstellkraft des O-Rings 13 in Richtung der Abdeckkappe 8 in ihre Freigabestellung gedrückt werden. Dies hat zur Folge, dass die Rastelemente 11 außer Eingriff von der Anschlagkante 15 der Aufnahmebuchse 7 kommen und in einen Bereich der Aufnahmebuchse 7 gedrückt werden, der ausreichend Platz bietet, damit die Rastelemente 11 so weit aufgespreizt werden können, dass das vordere Ende des Anschlusskopfes 3 zwischen den Rastelementen 11 hindurchgeschoben werden kann.

An der Innenseite der Rastelemente 11 und an dem vorderen, abdeckkappenseitigen Endbereich des Anschlusskopfes 3 sind korrespondierende Auflaufschrägen 16, 17 ausgebildet, die beim Einschieben des Anschlusskopfes 3 in die Aufnahme 10 in Kontakt kommen und zusammenwirken, um die Anschlusshülse 9 axial in ihre Freigabestellung und die Rastelemente 11 elastisch nach außen zu drücken.

Zur Herstellung einer Verbindung zwischen dem Anschlussendteil 2 und dem Anschlusskopf 3 wird der letztere in die Aufnahme 10 der Anschlusshülse 9 eingeschoben. Dabei kommen die Auflaufschrägen 16, 17 des Anschlusskopfes 3 und der Rastelemente 11 in Anlage mit der Folge, dass beim weiteren Einschieben des Anschlusskopfes 3 die Anschlusshülse 9 entgegen der Rückstellkraft des O-Rings 13 axial nach oben bewegt wird. Dadurch kommen die Rastelemente 11 außenseitig außer Eingriff von der Anschlagkante 15 der Aufnahmebuchse 7, so dass sie elastisch aufgespreizt werden, wie dies in der Figur 2 dargestellt ist. Im voll eingeschobenen Zustand des Anschlusskopfes 3 federn die Rastelemente 11 elastisch nach innen und kommen dabei mit der Ringnut 12 des Anschlusskopfes 3 in Eingriff. Wenn nun der Druck auf den Anschlusskopf 3 gelöst wird, wird die Anordnung bestehend aus Anschlusshülse 9 und Anschlusskopf 3 durch die Rückstellkraft des O-Rings 13 zurück in die Arretierungsstellung der Anschlusshülse 9 bewegt, in welcher ein Ausweichen der Rastelemente 11 durch den Kontakt mit der Anschlagkante der Aufnahmebuchse 7 verhindert wird (siehe Figur 3).

Zum erneuten Lösen der Verbindung ist es lediglich erforderlich, die Anschlusshülse 9 manuell in ihre Freigabestellung zu drücken, so dass der Anschlusskopf 3 aus der Aufnahme 10 herausgezogen werden kann. Der Kragen 9a der Anschlussbuchse 9 steht dabei so weit seitlich vor, dass eine manuelle Betätigung möglich ist.

## Patentansprüche

1. Anschlusseinrichtung mit einem Anschlussring (4) und einer in dem Anschlussring (4) gehaltenen Anschlusshülse (9), die eine zentrale Aufnahme (10) bildet, in welche ein Anschlusskopf (3) durch eine Einschuböffnung (10a) eingeschoben werden kann, und die Halteelemente (11) trägt, um einen Anschlusskopf (3) in der Aufnahme (10) zu fixieren, wobei die Anschlusshülse (9) in dem Anschlussring (4) zwischen einer Freigabestellung, in welcher die Halteelemente (11) aus einer inneren Spannstellung derart elastisch aufgespreizt werden können, dass ein Anschlusskopf (3) in die Aufnahme (10) eingeschoben bzw. aus dieser entnommen werden kann, und einer Arretierungsstellung, in welcher die Halteelemente (11) an einer solchen Ausspreizbewegung gehindert werden, axial bewegbar gehalten ist, und wobei die Anschlusshülse (9) durch elastische Mittel (13) in ihrer Arretierungsstellung gedrückt wird, **dadurch gekennzeichnet, dass** die Anschlusshülse (9) an ihrem offenen Endbereich aus dem Anschlussring (4) heraussteht, so dass sie manuell aus der Arretierungsstellung in die Freigabestellung gedrückt werden kann, wenn ein Anschlusskopf (3) in die Anschlusshülse (9) eingeschoben und durch die Halteelemente (11) fixiert ist.

2. Anschlusseinrichtung nach Anspruch 1, **dadurch gekennzeichnet, dass** die Anschlusshülse (9) an ihrem aus dem Anschlussring (4) vorstehenden Endbereich einen radial nach außen ragenden Kragen (9a) trägt.
dem Anschlussring (4) vorstehenden Endbereich einen radial nach außen ragenden Kragen (9a) trägt.

3. Anschlusseinrichtung nach Anspruch 2, **dadurch gekennzeichnet, dass** der Kragen (9a) derart dimensioniert ist, dass er seitlich gegenüber einem in die Anschlusshülse (9) eingeschobenen Anschlusskopf (3) vorsteht.

4. Anschlusseinrichtung nach einen der vorherigen Ansprüche, **dadurch gekennzeichnet, dass** in dem Anschlussring (4) eine Aufnahmebuchse (7) gehalten ist, in welcher die Anschlusshülse (9) axial bewegbar geführt ist, wobei die Anschlusshülse (9) an ihrem offenen Ende axial aus der Aufnahmebuchse (7) derart vorsteht, dass sie manuell betätigbar ist, wenn ein Anschlusskopf (3) in die Anschlusshülse (9) eingeschoben und durch die Halteelemente (11) fixiert ist.

5. Anschlusseinrichtung nach Anspruch 4, **dadurch gekennzeichnet, dass** die Halteelemente (11) in der Arretierungsstellung der Anschlusshülse (9) durch einen Anschlag (15) der Aufnahmebuchse (7) an einem Ausweichen nach außen gehindert werden.

6. Anschlusseinrichtung nach Anspruch 5, **dadurch gekennzeichnet, dass** die Anschlusshülse (9) in ihrer Arretierungsstellung durch den Kontakt der Halteelemente (11) mit dem Anschlag (15) der Aufnahmebuchse (7) axial in der Aufnahmebuchse (7) positioniert ist.

7. Anschlusseinrichtung nach Anspruch 6, **dadurch gekennzeichnet, dass** die Anschlusshülse (9) und/oder die Aufnahmebuchse eine schräge Kontaktfläche (14) aufweist, die sowohl eine axiale, als auch eine radiale Positionierung der Anschlusshülse (9) bewirkt.

8. Anschlusseinrichtung nach einem der vorherigen Ansprüche, **dadurch gekennzeichnet, dass** die Anschlusshülse (9) durch einen elastischen Ring, insbesondere einen O-Ring (13), der die Anschlusshülse (9) umgibt und sich zwischen der Anschlusshülse (9) und dem Anschlussring (4) oder der Aufnahmebuchse (7) axial abstützt, in die Arretierungsstellung gedrückt wird.

9. Anschlusseinrichtung nach einem der vorherigen Ansprüche, **dadurch gekennzeichnet, dass** die Halteelemente (11) innenseitig Auflaufschrägen (17) aufweisen, die mit entsprechenden Gegenflächen (16) eines Anschlusskopfes (3) zusammenwirken, um die Anschlusshülse (9) axial in die Freigabestellung und die Rastelemente (11) elastisch nach außen zu drücken, wenn der Anschlusskopf (3) in die Aufnahme (10) axial eingeschoben wird.

10. Anschlusseinrichtung nach einem der vorherigen Ansprüche, **dadurch gekennzeichnet, dass** ein Anschlusskopf an seinem in die Aufnahme (10) einzuschiebenden Endbereich Auflaufschrägen (16) aufweist, die mit entsprechenden Gegenflächen (17) an den Rastelementen (11) zusammenwirken, um die Anschlusshülse (9) axial in die Freigabestellung und die Rastelemente (11) elastisch nach außen zu drücken, wenn der Anschlusskopf (3) axial in die Aufnahme (10) eingeschoben wird.

11. Anschlusseinrichtung nach einem der vorherigen Ansprüche, **dadurch gekennzeichnet, dass** ein Anschlusskopf (3) eine Ringnut (12) aufweist, in welche die Halteelemente (11) federnd und insbesondere formschlüssig einrasten.
